# EUROPEAN PATENT APPLICATION

(11) **EP 4 640 950 A1**
(43) Date of publication of application: **29.10.2025**
(21) Application number: 24171819.6
(22) Date of filing: 23.04.2024
(51) Int. Cl.: E02D 3/046, E02D 1/08, E02F 3/96, E01C 19/28, G06N 3/04, G06N 3/09

(54) **DETERMINING ONE OR MORE SOIL CHARACTERISTICS**

(71) Applicant: UAM GmbH & Co. KG, 78187 Geisingen (DE)
(72) Inventor: Kraus, Michael A., 81541 Munich (DE); Drass, Michael, 55124 Mainz (DE)
(74) Representative: Müller-Boré & Partner Patentanwälte PartG mbB

(57) **Abstract**

The invention relates to a computer implemented method, a computer program, a computer system and a soil compactor for determining one or more soil characteristics of the soil. The method comprises receiving soil measurement information of the soil. The method further comprises determining, via at least one trained machine learning model, one or more soil characteristics of the soil based on the soil measurement information of the soil. At least one trained machine learning model is pretrained based on simulation data, the simulation data computed by simulating circumstances of movement of a soil compactor. After pretraining, the at least one trained machine learning model is trained based on soil measurement information from a plurality of soils. The method further comprises outputting at least one of the one or more soil characteristics of the soil.

## Description

The technical field of the present application is soil mechanics and/or evaluating soil, particularly in the context of soil compaction. Aspects relate to applying artificial intelligence, specifically machine learning, to determining soil characteristics.

The compaction of soil may lead to a reduction of pore space between soil particles (e.g., increase soil density and/or decrease air voids) and higher soil stiffness (e.g., greater shear strength). Increased soil stiffness changes the response of the soil to a static or dynamic load.

It may be a problem to determine changes in soil stiffness and in turn a compaction status (e.g., density) of a soil. More specifically, it may be a problem to determine the impact of changes in soil stiffness on a soil compactor (e.g., the impact on movement of a contact plate of the soil compactor) and in turn use the impact determination to establish a compaction status of the soil.

In some cases, parameters influencing the success of soil compaction may include load (e.g., applied, imposed or cyclical load) and compaction time. It may be assumed that soil composition and soil thickness remain constant.

Determining one or more soil characteristics of a soil using machine learning may be problematic because of the limited number of data points. Typically, an artificial intelligence model (e.g., a machine learning model) requires millions of data points in order to be sufficiently accurate (e.g., reach a specified level of accuracy, such as about 85% or about 90%), however, there may be just a few thousand soil measurements or even less for use to determine the one or more soil characteristics of the soil.

### Method Aspect

According to a first aspect, a computer implemented method for determining one or more soil characteristics of a soil is provided. The method comprises receiving soil measurement information of the soil. The method further comprises determining, via at least one trained machine learning model, one or more soil characteristics of the soil based on the soil measurement information of the soil, wherein the at least one trained machine learning model is (i.e., has been) pretrained based on simulation data, the simulation data computed by simulating circumstances of movement of a soil compactor, wherein, after pretraining, the at least one trained machine learning model is (i.e. has been) trained based on soil measurement information from a plurality of soils. The method further comprises outputting at least one of the one or more soil characteristics of the soil.

Determining the one or more soil characteristics of the soil may comprise determining one or more of the following: a soil type (i.e., soil class or soil classification), an indication of whether the soil is compactible and a degree of compaction of the soil. The determinations may be provided as labels. The soil type and/or the indication of whether the soil is compactible may have a corresponding probability of correctness (i.e., a percentage estimating the accuracy of the determination). The degree of compaction of the soil may be provided as a real number between 0 and 1, i.e., *η* ∈ [0,1]. The degree of compaction may be measured in terms of dry mass density or dry unit weight and moisture content. The determinations of the soil type, whether the soil is compactible, and the degree of compaction may be referred to as tasks.

The soil type may be one of a plurality of soil types. More specifically, the soil type may be one of the three following soil types: non-cohesive or cohesionless soil (e.g., non-plastic soil, coarse-grained or granular soil, or gravel, sand), cohesive soil (e.g., plastic soil, clay), mixed-granularity soil. A mixed-granularity soil may have a composition differing by at least 5% or at least 10% from cohesive and/or non-cohesive soil; additionally or alternatively, the mixed-granularity soil may be a combination of cohesive and non-cohesive soil (e.g., 40-60% cohesive soil and 40-60% non-cohesive soil). A probability of correctness may be associated with a determined soil type.

The soil types given above correspond to the soil types typically found on construction sites when soil is compacted. Cohesive soils (e.g., clay) might not be suitable for compaction without pre-treatment. Accordingly, the cohesive soils may have been treated with cement (e.g., limestone cement) and then compacted directly before hardening of the cement. The soil measurement information from the plurality of soils may include measurements may have been taken during the compaction.

The indication of whether the soil is compactible may be provided as one of two options, e.g.,
- yes or no,
- a binary value where a first value indicates yes, and a second value indicates no.

A probability of correctness may be associated with one or more of the indication of whether the soil is compactible, the soil type and the degree of compaction.

### Soil characteristics

In some cases, the one or more soil characteristics of the soil may include a plurality of soil characteristics and outputting at least one of the one or more soil characteristics of the soil may comprise outputting a first characteristic of the one or more soil characteristics of the soil. Subsequently, previous steps of the method may be iterated. More specifically, further soil measurement information of the soil may be received. In addition, the method may further comprise determining, by the at least one trained machine learning model a second characteristic of the one or more soil characteristics of the soil. The method may further comprise outputting the second characteristic of the one or more characteristics of the soil. An additional iteration may be performed to output a third characteristic of the one or more characteristics of the soil.

In some cases, the first characteristic of the soil may be whether the soil is compactible, the second characteristic of the soil may be a degree of compaction of the soil (i.e., a compaction status of the soil) and the third characteristic of the soil may be a soil type of the soil. The first characteristic of the soil may be output within 10 seconds (e.g., within 3 seconds) of initially receiving the soil measurement information of the soil. The second characteristic of the soil may be output multiple times or continuously output. The third characteristic of the soil may be output after compaction of the soil, e.g., after the second characteristic of the soil indicates that the soil has been compacted and/or that a specified degree of compaction of the soil has been reached.

The soil measurement information from the plurality of soils may be based on movement of the soil compactor and/or a status of the soil compactor. Hence, before receiving the soil measurement information from the plurality of soils, the method may comprise measuring based on movement of the soil compactor (e.g., measuring movement of the soil compactor or measuring an effect of movement of the soil compactor on the soil) and/or measuring a status of the soil compactor. Measuring movement of the soil compactor may comprise measuring velocity or acceleration of the soil compactor or a portion of the soil compactor.

### Pretraining and Training

Simulating circumstances of movement of the soil compactor may comprise one or more of the following: simulating one or more forces applied by the soil compactor, simulating movement of the soil compactor, simulating environmental conditions proximate to the soil compactor.

The at least one trained machine learning model may be (i.e., may have been) pre-trained by computing transformed simulation data, wherein the at least one trained machine learning model may be pretrained using the transformed simulation data. The transformed simulation data may be computed by applying a transform (e.g., a Fourier transform) to the simulation data. The at least one trained machine learning model may have been pre-trained on a Fourier transform (e.g., a fast Fourier transform) of the simulation data. The simulation data may be based on or may simulate a time series.

In addition or alternatively, data in the frequency domain may be computed and used as the simulation data.

In addition or alternatively, the transformed simulation data may be computed by applying a wavelet transform (e.g., discrete wavelet transform) to the simulation data. The at least one trained machine learning model may have been pretrained using the transformed simulation data.

The simulation data computed by simulating circumstances of movement of the soil compactor may have been computed for a specified time period. The simulation data may have been computed by simulating motion of the soil compactor and/or simulating a status of the soil compactor for the specified time period.

Simulating the circumstances of movement of the soil compactor may comprise simulating at least one mechanical system.

The at least one mechanical system may be defined based on one or more of the following: initial parameters and/or conditions, an equation of motion, an output equation. At least one thousand simulations or up to ten thousand simulations may have been carried out to pre-train the at least one trained machine learning model.

The at least one mechanical system may have one or more of the following characteristics: nonlinear, nonstationary.

The input parameters of each of the at least one mechanical system may include one or more of the following: mass, friction, viscosity, stiffness (i.e., the extent to which an object resists deformation in response to an applied force), magnitude of force and frequency of the force. Mass may be constant. The outputs of each of the at least one mechanical system may include deformations, velocity and acceleration.

The at least one mechanical system may be a single degree of freedom system or a multiple degree of freedom system. In comparison to the multiple degree of freedom system, the single degree of freedom system may have the advantage of providing sufficiently accurate results and enabling more efficient computation, particularly in view of being simpler than the multi-degree of freedom system. Specifically, the single degree of freedom system may have the advantage of being defined or governed by a single second order differential equation.

In some cases, for each soil type of a plurality of soil types, simulating the circumstances of movement of the soil compactor may comprise simulating a mechanical system corresponding to the soil type, wherein the at least one mechanical system is one of a plurality of mechanical systems and each one of the plurality of mechanical systems corresponds to a different soil type. In some cases, there may be exactly 3 soil types.

In addition or alternatively, when the at least one mechanical system is one of a plurality of mechanical systems, the mechanical systems may differ from each other in that one or more of stiffness, mass and damping coefficients vary among the mechanical systems. Intervals for stiffness and damping in the plurality of mechanical systems may be extended by a factor of 2 beyond the ranges of standard intervals for stiffness and damping conventionally known for soils.

The simulation data may be computed by calibrating the at least one mechanical system using a sample of (e.g., one or two sets of values of the soil measurement information) soil measurement information from the plurality of soils.

The simulation data may be computed by varying the input parameters to the at least one mechanical system within specified parameter intervals or within the specified parameter intervals multiplied by a factor (e.g., 1.5 to 3 or about 2). The specified parameter intervals may be conventionally known intervals soils (e.g., encompassing different types of soils).

In addition or alternatively, the simulation data may be (e.g., may have been) computed by simulating (e.g., for a soil having a respective soil type) at least one of the following:
operation of the soil compactor,
applying at least one force on the soil, wherein the at least one force may include one or more of tension, compression, and shear,
at least one effect of movement of the soil compactor on the soil,
at least one effect of repeated application of the at least one force from the soil compactor on the soil, including a tensile stiffness of the soil after applying a lengthwise force on the soil, wherein the at least one force includes one or more of a tensile force, a compressive force, and a shear force,
at least one effect of vibration on the soil.

The simulation data may be computed by applying an ordinary differential equation solver to the differential equation(s) of the mechanical system.

Data (e.g., simulation data or measurement data) in the frequency domain may be particularly suitable for determining soil characteristics because determining soil characteristics is a dynamic problem involving determining effects or circumstances of movement in a mechanical system (e.g., chaotic excitation of a nonstationary mechanical system), as opposed to a stationary system. In the mechanical system, the derivative may change over time, i.e., characteristics of the system may change as the system is acted upon. For example, as the soil compactor acts on the soil, stiffness and viscosity of the soil change. Changes in characteristics of the system and/or nonstationarity of the data may be problematic in the temporal or spatial domain, but not in the frequency domain. Data in the frequency domain may have reduced noise and smaller size in comparison to data in the temporal domain. Moreover, it may be easier to extract patterns from data in the frequency domain in comparison to data in the temporal domain.

Furthermore, when receiving soil measurement information, properties of the soil do not change rapidly, e.g., frequency amplitudes derived from the soil measurement information do not change significantly from 1 millisecond (ms) to the next. The slowness or smoothness of changes in frequency amplitude may enable accurate determination of soil characteristics when transformed values are used, particularly in the frequency domain. In other words, there may be a smoothness in a trajectory of the received soil measurement information that may facilitate analysis in the frequency domain. This advantage of accurate determination of soil characteristics may be applicable when using both Fourier and Wavelet transforms.

Accordingly, transformed soil measurement information (e.g., soil measurement information in the frequency domain) may be particularly suitable for determining soil characteristics, particularly when the determining of the soil characteristics is carried out on a computing device with limited resources (e.g., limited memory), such as an embedded system (e.g., a microcontroller) on the soil compactor. Moreover, a discrete Fourier transform, particularly a fast Fourier transform, may be particularly suitable for the computing device with limited resources (e.g., in comparison to a continuous Fourier transform), especially because it may be necessary to fix the input size of each input to the at least one trained machine learning model in view of limited memory of the computing device. Furthermore, when using time series data (e.g., soil measurement information in the temporal domain) to determine the one or more soil characteristics of the soil it may be necessary to take the second derivative of the time series data. However, taking the second derivative of the time series might not be possible on a computing device with limited resources.

In some cases, the at least one trained machine learning model may comprise a plurality of trained machine learning models and/or the one or more soil characteristics of the soil may comprise a plurality of soil characteristics of the soil. More specifically, there may be a different trained machine learning model (e.g., a different trained neural network) for each soil characteristic of the soil. For example, if the plurality of soil characteristics include three soil characteristics, e.g., the indication of whether the soil is compactible, the soil type and the degree of compaction, there may be three different trained machine learning models, each one trained to determine a different one of the three soil characteristics.

Providing a different trained machine learning model for each soil characteristic of the soil may have the advantage of simplifying each of the three trained machine learning models. More specifically, the memory required to store the plurality of trained machine learning models (e.g., where each model is trained to determine a different soil characteristic of the soil) may be less than the memory required to store one trained machine learning model trained to carry out all of the tasks.

Accordingly, providing a different trained machine learning model for each soil characteristic of the soil to be determined may be particularly suitable when the computing device has limited resources. In some cases, the computing device with limited resources might not have sufficient working memory to store a trained machine learning model capable of determining multiple soil characteristics of the soil. However, the computing device with limited resources may have sufficient working memory to store a trained machine learning model capable of determining a first soil characteristic of the soil and may use other memory (e.g., flash memory) to store trained machine learning models capable of determining a second (and possibly a third) soil characteristic. Alternatively, the computing device may be provided with a first trained machine learning model to determine a first soil characteristic of the soil, a second trained machine learning model to determine a second soil characteristic of the soil and a third trained machine learning model to determine a third soil characteristic of the soil.

For example, after determining the first soil characteristic of the soil, the first trained machine learning model may be deleted from the memory of the computing device in order to store the second trained machine learning model. After determining the second soil characteristic of the soil, the second trained machine learning model may be deleted from the memory of the computing device in order to store the third machine learning model.

The method may further comprise comparing the degree of compaction to a specified value (e.g., a specified value ≥ 0.51 and/or ≤ 1.0, such as 0.7, 0.8, 0.9 or 1.0) to determine whether the soil has been compacted. For example, if the soil is compacted to a level greater than or equal to the degree of compaction, then the method may comprise determining that the soil has been compacted.

Receiving the soil measurement information of the soil, determining the one or more soil characteristics of the soil and outputting the at least one of the one or more soil characteristics may be carried out by at least one computing device, e.g., a single computing device.

Pretraining may be distinguished from training in that pretraining provides a basis for determining soil characteristics based on specified parameter intervals, independent of any specific soil. In other words, the at least one trained machine learning model may have been pretrained to determine one or more soil characteristics independent of soil type, plasticity of the soil, moisture content of the soil or other physical characteristics of a specific soil. Hence, the at least one trained machine learning model may have been pretrained to determine one or more soil characteristics based on artificially or synthetically defined parameters. Pretraining may use simulation data, i.e., computer-generated data or synthetic data.

In contrast to pretraining, the at least one trained machine learning model may have been trained to determine one or more soil characteristics from the plurality of soils using measurement information obtained based on contact with the plurality of soils. Training may use soil measurement information, e.g., from at least one (physical) measurement sensor located on the soil compactor. The at least one measurement sensor may be located on, in or near/proximate to (e.g., within less than about 1 meter, within less than about 3 meters, within less than about 10 meters) a soil of the plurality of soils being measured.

Using simulation data to pretrain the at least one machine learning model may have the advantage of reducing the amount of training data required to produce the trained machine learning model in order to accurately determine (i.e., determine at a predetermined level of accuracy) one or more soil characteristics of the soil.

The at least one trained machine learning model may be provided (e.g., transmitted over a computer network) by a general-purpose computer to the computing device, wherein the computing device may be on or part of the soil compactor.

Receiving the soil measurement information (e.g., of the soil or of the plurality of soils) may comprise receiving a plurality of measurements over time, e.g., a time series. In other words, the soil measurement information may be a sequence of discrete-time data received as a series of signals from the measurement sensors. Hence, the soil measurement information may comprise a set of measurements or a set of values (i.e., quantities), where each measurement is associated with a time (e.g., a measurement time or a time of receipt). Accordingly, the soil measurement information may have a time series character.

The soil measurement information may be received from at least one measurement sensor. The at least one measurement sensor may be located on the soil compactor or near (e.g., within less than about 1 meter, within less than about 3 meters, within less than about 10 meters) the soil compactor. The at least one measurement sensor may be a single sensor having only one channel. Accordingly, the at least one measurement sensor may measure in a single direction resulting in a time series in one direction. Hence, values in the time series may be scalars rather than vectors. This limited configuration may be advantageous for cost reasons. However, more training data (e.g., soil measurement information) may have been required to train the at least one trained machine learning model.

Determining the one or more soil characteristics of the soil may comprise predicting the one or more soil characteristics of the soil and/or evaluating the soil.

Outputting (e.g., displaying) at least one of the one or more soil characteristics of the soil may comprise outputting the one or more soil characteristics of the soil. Outputting at least one of the one or more soil characteristics of the soil may be carried out on the soil compactor (e.g., at a display of the soil compactor and/or using an audio device of the soil compactor) and/or the at least one of the one or more soil characteristics of the soil may be transmitted to a computer remote from the soil compactor for display.

The at least one trained machine learning model may be trained based on the soil measurement information from the plurality of soils by means of at least one fixed length input provided after pre-training. In some cases, all or substantially all of the input provided during training of the at least one trained machine learning model may have a fixed length.

The soil measurement information (e.g., of the plurality of soils, of the soil) may include multiple sets of values, e.g., multiple sets of values of a time series. A plurality of sets of values of the multiple sets of values may have different lengths. In other words, each set of values in the plurality of sets of values may have a different number of values.

Inputs to the at least one trained machine learning model may be derived from the multiple sets of values. Accordingly, each of the multiple sets of values may be processed (e.g., transformed) to produce a plurality of fixed length inputs (e.g., transformed sets of values) to the at least one machine learning model.

Providing fixed length input may be advantageous when the computing device performing the training has limited resources, e.g., limited memory. In particular, when the computing device has limited resources, the computing device may be incapable of handling variable length input, i.e., sets of values having different lengths.

Moreover, fixed length input might not be compatible with a time series of soil measurement information, i.e., soil measurement information in the temporal domain including multiple sets of values. This is because providing fixed length input using soil measurement information in the temporal domain may require padding or truncating the soil measurement information, which may adversely affect the accuracy of the result (i.e., the determined soil characteristics). In contrast, when fixed length input in the frequency domain (e.g., as measurement information to which a Fourier transform has been applied) is provided during training (and/or to the trained machine learning model during inferencing) memory use may be reduced while still maintaining sufficient accuracy.

In some cases, receiving the soil measurement information of the soil may comprise receiving a plurality (e.g., series or sequence) of samples (i.e., signals or communications), e.g., from the at least one measurement sensor. The plurality of samples may be interpreted or processed to derive corresponding values. Samples of the plurality of samples may be received in groups or in different experiments. Hence, each set of values in the multiple sets of values may be obtained from a different group of samples of the plurality of samples. Moreover, each group of samples may correspond to a set of values. The groups of samples or a subset of the groups of samples may be obtained over. For example, a first group of samples may be obtained over two seconds and include 512 samples (512 values), a second group of samples may be obtained over four seconds and include 1024 samples (1024 values) and a third group of samples may be obtained over twenty seconds and include 5120 samples (5120 values).

Hence, the soil measurement information of the plurality of soils may comprise sets of measurements received over time, each set of measurements being received for a duration, wherein a subset of the set of measurements have varying durations. The varying durations may provide more accurate results when training the at least one trained machine learning model.

Moreover, the at least one measurement sensor may receive a substantial amount of data in a short period of time (e.g., a few seconds), particularly if the at least one measurement sensor includes a plurality of measurement sensors or the at least one measurement sensor has multiple channels. It may be problematic to store and process the soil measurement information, particularly when determining the one or more soil characteristics of the soil is carried out on a computing device with limited resources (i.e., low capability). Each channel may correspond to (e.g., may be implemented as) a direction of measurement, e.g., a first channel may correspond to the X direction, a second channel may correspond to the Y direction and a third channel may correspond to the Z direction.

The method may further comprise applying a transform (e.g. a Fourier transform) to the multiple sets of values of the soil measurement information to produce transformed measurement information including (e.g., consisting of) transformed sets of values. After pre-training, the at least one trained machine learning model may be trained via the transformed sets of values.

The sets of transformed values (e.g., each of the sets of transformed values) may comprise amplitudes, e.g., frequency amplitudes.

Hence, the at least one trained machine learning model may be (i.e., may have been) trained based on the soil measurement information of the plurality of soils in the sense that the soil measurement information is in the temporal domain when the soil measurement information is received, the soil measurement information is transformed (e.g., using a Fourier transform such as a fast Fourier transform) and the at least one trained machine learning model is trained using the transformed soil measurement information.

The at least one trained machine learning model may have been pre-trained using transformed simulation data, e.g., simulation data in the frequency domain. In this way, in both the training and the pretraining steps, the at least one trained machine learning model is trained using data in the same domain, e.g., the frequency domain. For example, the at least one trained machine learning model may have been pre-trained using transformed simulation data and trained using transformed soil measurement information, such that pretraining and training are carried out using transformed data (e.g., data to which the transform has been applied).

As an alternative to the Fourier transform, a wavelet transform may be applied to the multiple sets of values of the soil measurement information to produce the transformed measurement information including the transformed sets of values. The wavelet transform may be used to produce the transformed sets of values when the wavelet transform is also used to produce the transformed simulation data. In the context of a low capability computing device (e.g., a computing device with limited memory) the Fourier transform may be advantageous in comparison to the wavelet transform since the Fourier transform may be simpler to implement and/or require less memory.

Conventionally, when applying a machine learning model to a time series (e.g., training the machine learning model based on the time series or using the machine learning model to make a determination or prediction based on the time series), the conventional approach would be to use data augmentation techniques to augment the time series in order to obtain a sufficiently accurate result, rather than applying a transform to the time series.

In addition or alternatively to applying a transform (e.g., a Fourier transform or a wavelet transform as described above), the at least one trained machine learning model may be trained using the soil measurement information from the plurality of soils in the temporal domain, i.e., using the original time series data. Accordingly, an auto-encoder may receive the multiple sets of values of the time series as input and learn an encoding (i.e., one or more fixed length vectors) from the time series. The encoding may be injective. The autoencoder may be used for dimensionality reduction, e.g., to reduce features in the time series and/or filter out useless or less useful features from the time series. The autoencoder may be capable of learning a dense representation of the time series. The autoencoder may be implemented as a neural network including the same number of neurons in an input layer and an output layer. The autoencoder may include a cost function that imposes a penalty when the output is different from the input. An advantage of the autoencoder in comparison to the transform (e.g., the Fourier transform) is that the autoencoder can adapt to the soil measurement information to be analyzed whereas the transform may involve applying a set of equations to the soil measurement information regardless of the content of the soil measurement information. Put another way, the autoencoder may identify different features as important for different soil measurement information whereas the transform is applied independently of the features of the soil measurement information.

In some cases, the at least one trained machine learning model may comprise a plurality of trained machine learning models and a first of the plurality of trained machine learning models may be (i.e., may have been) trained using the soil measurement information in the temporal domain while a second of the plurality of trained machine learning models may be trained using the transformed soil measurement information. More specifically, an ensemble or a mixture of experts may be used, as discussed in more detail below.

Conventionally, when a machine learning model is applied to a time series, the goal is to predict the next element in the time series, i.e., solving a regression problem. However, when determining one or more soil characteristics of the soil, it is not helpful to predict the next element in the time series. Instead, determining the one or more soil characteristics of the soil is comparable to labeling a current process, predicting a label for the current process or classifying the current process i.e., solving a classification problem rather than a regression problem.

Conventionally, when providing a time series as input to a machine learning model, nonstationary data would first be removed. However, when determining the one or more soil characteristics of the soil, there is no need to remove nonstationary data from the soil measurement information.

When the at least one trained machine learning model includes the plurality of trained machine learning models, a first trained machine learning model may be (i.e., may have been) pretrained using simulation data in the temporal domain and then trained using sets of values of the soil measurement information in the temporal domain. In addition or alternatively, the plurality of trained machine learning models may include a second machine learning model pre-trained using transformed simulation data in the frequency domain and then trained using transformed sets of values of the soil measurement information in the frequency domain. In addition or alternatively, the plurality of trained machine learning models may include a third machine learning model pre-trained using transformed simulation data in both the temporal and frequency domains (i.e., transformed simulation data that was transformed using a wavelet transform) and then trained using transformed sets of values of the soil measurement information in both the temporal and frequency domains (i.e., transformed sets of values of the soil measurement information that were transformed using the wavelet transform).

The method may further comprise setting each of the sets of transformed values to a specified number of transformed values, such that each of the inputs to the at least one trained machine learning model has the same length, when setting each input to the specified number of transformed values comprises truncating sets of transformed values having a length greater than the specified number and/or padding sets of transformed values having a length less than the specified number. In this way, inputs to the at least one trained machine learning model may have a fixed (i.e., predetermined or specified) length, e.g., the inputs may be provided as one or more fixed length vectors. In some cases, the specified number of transformed values may be between about 32 and about 128, less than 256 or more specifically about 64. The specified number of transformed values may refer to the number of coefficients, e.g., the number of coefficients of one of the inputs to the at least one trained machine learning model, more specifically, the number of Fourier coefficients of one of the inputs.

Providing fixed length input in the temporal domain (i.e., using the original time series without transformation) would typically require padding at least some of the sets of values. However, when determining one or more soil characteristics, padding time series data may lead to inaccurate results since the padding significantly impacts the results. The Fourier transform provides a way to deal with variable length time series data since the frequency is independent of the duration of a set of values in the time series or the length of the time series. Hence, it is possible to set each of the sets of transformed values to the specified number of transformed values while determining the characteristics of the soil with sufficient accuracy.

When transformed values (e.g., values in the frequency domain) are used to retrain and/or train the at least one machine learning model, the at least one measurement sensor may include a plurality of measurement sensors and/or a plurality of channels. More specifically, the at least one measurement sensor may be capable of obtaining soil measurement information in the X, Y, and Z directions, e.g., from three measurement sensors or from a single measurement sensor with three channels. Hence, values received from the plurality of measurement sensors may be vectors rather than scalars. Obtaining soil measurement information in the X, Y, and Z directions may facilitate providing sufficient data to the at least one trained machine learning model, particularly when data in the frequency domain is being provided as input to the at least one trained machine learning model. In some cases, the at least one measurement sensor may be implemented as a plurality of measurement sensors, e.g., a plurality of acceleration sensors, e.g., at least three acceleration sensors. In some cases, measurement information from up to about 16 measurement sensors may be received.

Receiving soil measurement information in vector form and/or from multiple sensors may have the advantage of reducing the amount of soil measurement information required, particularly during training.

It may be that the transformed values (e.g., using the Fourier transform) may lead to more accurate determinations of soil characteristics than the original time series when the measurement information includes data from a plurality of sensors or a sensor with multiple channels (e.g., measurement information in the X, Y and Z directions), particularly when the computing device has limited resources. In contrast, the time series with transformation may lead to more accurate determinations of soil characteristics when there is a single sensor having a single channel or when a capable computing device (e.g., an industrial PC as opposed to an embedded system with limited resources) is used.

The method may further comprise interpolating the transformed values so that amplitudes corresponding to the same frequency in different sets of the sets of transformed values are matched with each other.

More specifically, the method may further comprise creating a vector of frequency amplitudes from the sets of transformed values, comprising interpolating the frequency amplitudes of each set of transformed values so that amplitudes corresponding to the same frequency are in the same position in each of the vectors.

Accordingly, amplitudes for a given frequency might only appear in a subset of the sets of values. The interpolation may ensure that amplitudes for the given frequency are assessed together and/or amplitudes for different frequencies are not mixed.

Hence, even if sets of frequency amplitudes have different lengths (see i.e., the sets of values include different numbers of amplitudes because they are derived from signals having different lengths) and include amplitudes for varying frequencies, and amplitude for first frequency and a first set of amplitudes will be matched with amplitudes for the first frequency and other sets of frequency amplitudes. In other words, there may be a set of bins with one bin for each frequency and amplitudes of a specific frequency are always placed in the same bin. In some cases, there may be at least about 100 bins or at least about 200 bins.

For example, given bins in a set of bins including bin 1, bin 2 and bin 3, the bins may be configured as follows:
- bin 1: 1.10-1.19 Hertz (Hz)
- bin 2: 1.20-1.29 Hz
- bin 3: 1.30-1.39 Hz
Continuing the example, frequency amplitudes for 1.12 Hz and 1.15 Hz would go in bin 1 and frequency amplitudes for 1.23 Hz and 1.25 Hz would go in bin 2.

Determining one or more characteristics of a soil may comprise determining whether the soil is compactible and/or the progress of compaction. Determining one or more characteristics of a soil may enable a determination to be made regarding what can be done to improve soil compactibility or speed up soil compaction, e.g., by changing the moisture content and/or level of cohesion of the soil.

The method may further comprise filtering out transformed values having a frequency greater than a specified frequency. The filtering may be particularly suitable when the computing device has limited resources, particularly, when the computing device has limited memory. For example, the specified frequency may be set based on soil engineering/physics, according to which frequencies above 10 Hz do not usually include useful information. Nevertheless, the specified frequency may be set significantly higher than 10 Hz in order to increase the soil measurement information provided to the at least one trained machine learning model. Hence, there may be a trade-off between efficient use of memory and providing sufficient soil measurement information to the pre-trained machine learning model. For example, the specified frequency may be sent to a value between about 150 Hz and about 250 Hz, even more specifically, about 200 Hz.

The at least one measurement sensor may be physically located on the soil compactor and/or the computing device may be physically located on the soil compactor.

It may be advantageous for the computing device to be physically located on the soil compactor so that they soil compactor can operate independently of an external computer network and/or the soil compactor can provide results to an operator or other persons on the construction site in real time. Moreover, it may be easier to avoid introducing noise or otherwise influencing the soil measurement information if the soil measurement information is not transferred over a network (e.g., a wireless network). Accordingly, a building or construction project including soil compaction may be able to move forward or progress more efficiently.

In some cases, one or more of the following applies to the computing device:
- the computing device includes an embedded system and/or a m icrocontrol ler,
- the computing device is contained on a single chip or on a single integrated circuit,
- the computing device includes a processing unit (central processing unit or graphics processing unit), working memory and one or more peripherals on a single chip.

Accordingly, the computing device may have limited resources, specifically, limited memory, e.g., limited working memory.

In some cases, the computing device may be considered to have limited resources (e.g., limited working memory) when the computing device is capable of storing less than five minutes (or less than ten minutes) of measurement information from one measurement sensor (e.g., an accelerometer). In other words, the computing device might be considered to have sufficient resources rather than limited resources if the computing device is capable of storing at least five minutes (or at least ten minutes) of measurement information from one measurement sensor. More specifically, the computing device might be considered to have sufficient resources if the computing device has between about 100 MB and about 200 MB of working memory.

As discussed in more detail in the section relating to the computing device below, the computing device may be limited to less than 2048 KB of RAM, more specifically, between 512 KB and 1024 KB of RAM, e.g., about 564 KB RAM. With limited memory, about between about 50% to about 75% of the working memory (e.g., RAM) may be used by the at least one trained machine learning model and the rest of (i.e., remaining) available working memory (e.g., excluding operating system and/or overhead) may be used for receiving measurement information. For example, if there is 564 KB of RAM, about 300-400 KB of RAM (e.g., about 53% to about 71%) may be used by the at least one trained machine learning model.

### Neural Network

The at least one trained machine learning model may include at least one neural network. The at least one neural network may include one or more of the following: a feedforward neural network, a recurrent neural network such as a long short-term memory neural network, a convolution old neural network. Characteristics of the at least one neural network (e.g., layers, weights, activation functions, size of fixed length input) may be determined via a hyperparameter search.

The feedforward neural network and/or the long short-term memory neural network may be more suitable for determining the one or more soil characteristics of the soil than other types of neural networks in view of the time series character of the soil measurement information.

In addition or alternatively, the at least one neural network may have between about 5 layers and about 15 layers, more particularly, the at least one neural network may have about 10 layers. In addition or alternatively, the at least one neural network may have between about 300 nodes and about 2000 nodes, more particularly, the at least one neural network may have between about 600 nodes and about 1000 nodes. In addition or alternatively, the at least one neural network may comprise an output layer with one node. In addition or alternatively, the at least one neural network may have a sigmoid activation function.

Limiting the number of layers of the at least one neural network to a specified number of layers, e.g., to less than 15 layers or to about 10 layers, may have the advantage that the at least one neural network can be used to determine one or more soil characteristics on a computing device having limited resources, more specifically, the at least one neural network can be stored in the memory of the computing device having limited resources, e.g., limited memory. In addition or alternatively, limiting the number of nodes of the at least one neural network to a specified number of nodes, e.g., to less than 2000 nodes or less than 1000 nodes, may have the advantage that the at least one neural network can be used to determine one or more soil characteristics on a computing device having limited resources, more specifically, the at least one neural network can be stored in the memory of the computing device having limited resources, e.g., limited memory.

In a general-purpose computer or a computing device having sufficient memory it may be advantageous not to limit the at least one neural network to the specified number of layers and/or the specified number of nodes, since it may be possible to more accurately determine of the one or more soil characteristics of the soil with more layers and/or more nodes.

Use of the sigmoid activation function may have the advantage that an output of the at least one neural network maps to a range between 0 and 1. In this connection, tanh could also be used as the activation function. Accordingly, when the one or more soil characteristics include the degree of compaction of the soil, the output of the at least one neural network can be interpreted as the degree of compaction of the soil.

The at least one neural network may include a plurality of neural networks, e.g., one of the neural networks described above, an autoencoder (e.g., the autoencoder described above) and/or a gate (as described in more detail below).

### Machine learning models

The method may further comprise deriving model parameters from the soil measurement information and storing the model parameters in a nonvolatile memory of the computing device.

The at least one machine learning model may compute a meta model from the soil measurement information, such that the soil measurement information does not need to be stored in the nonvolatile memory.

The at least one trained machine learning model may include a plurality of trained machine learning models. The method may further comprise using an ensemble method and/or a mixture of experts to train the plurality of machine learning models. In some cases, cross validation, Bayes model averaging, Bayes model combination or bucket of models may be used to choose the best model for each task.

In one example, there may be a mixture of experts with three experts. Although the example refers to a mixture of experts, an ensemble may also be used. A first expert may be a neural network pre-trained and trained on time series data, a second expert may be a neural network pre-trained and trained on a Fourier transform of the time series data and a third expert may be a neural network pretrained and trained on a wavelet transform of the time series data. In this example and in other examples, the one or more soil characteristics of the soil may include determining a degree of compaction of the soil. In this example and in other examples, determining a degree of compaction of the soil may comprise determining whether the soil is fully compacted e.g., the degree of compaction is greater than or equal to the specified value.

Continuing the example, the first expert may determine a probability of 0.8/1 that the soil is fully compacted, the second expert may determine a probability of 0.99/1 that the soil is fully compacted, the third expert may determine a probability of 0.97/1 that the soil is fully compacted. The mixture of experts may further comprise a gate (e.g., implemented as a neural network) and the gate may be trained to determine which of the experts (e.g., the first expert, the second expert, the third expert) to choose with regard to determining whether the soil is fully compacted. For example, the gate may be trained to determine which rule to apply or how to tailor a rule to be applied in order to arrive at a consensus. The gate may also be referred to as a mixing network.

In addition or alternatively, the probabilities determined by each of the experts may be output and a human may decide which of the probabilities to select. For example, given that two of the probabilities (i.e., the probabilities determined by the second expert and the third expert) are closer to each other in comparison to their distance from the third probability and one of the probabilities (i.e., the probability determined by the first expert) is further from the other two probabilities, the method may further comprise recommending the two of the probabilities that are closer to each other and/or recommending an average of the two of the probabilities that are closer to each other.

In some cases, e.g., when the computing device has limited resources (e.g., an embedded system and/or microcontroller with limited memory) and the ensemble method and/or the mixture of experts is used, a specific one of the plurality of trained machine learning models may be selected. For example, the plurality of trained machine learning models may comprise a specific neural network pre-trained on transformed simulation data (e.g., simulation data in the frequency domain) and trained on transformed soil measurement information (e.g., soil measurement information in the frequency domain), and the method may further comprise selecting the specific neural network from the plurality of trained machine learning models.

The circumstances of movement may comprise one or more of the following: acceleration, strain, vibration, pressure, force, piezoelectricity, temperature.

The at least one machine learning model may be based on a supervised machine learning algorithm. In particular, prior to carrying out the method for determining one or more soil characteristics, labeled training data may be provided to the machine learning model. Labeling of the training data may be carried out at 4 to 8 training fields (i.e., relatively flat and obstruction-free areas having soil), or at least 6 training fields. Systematic compaction of the fields may be performed, taking care to ensure that adjacent compaction points have little or no effect on each other. Each combination of {load, compaction duration, soil type} may be repeated at least 3 times. The following information may be recorded at each compaction point:
- at least 5 dynamic load plate tests to determine a dynamic load plate modulus,
- two soundings with a light piledriver to determine soil compaction at different depths,
- geodetic measurement of heights before and after compaction to qualitatively evaluate compaction success.

In addition, measurement of ground vibrations (e.g., via geophones) may be made in the vicinity of the training fields.

For the geotechnical evaluation of the compaction success, measured training values from the dynamic load plates, the light pile driver and from the height measurements may be used. Depending on the soil type, different target values and a different weighting of the respective individual measured training values may be determined.

A degree of compaction label may be determined based on the measured training values.

The at least one trained machine learning model may be trained by deriving model parameters from the soil measurement information; the model parameters may be stored in non-volatile memory of the computing device. In other words, a result of training the at least one trained machine learning model may comprise a meta-model derived from the soil measurement information (e.g., the meta-model derived from the soil measurement information may be based on a meta-model developed in pre-training), such that the soil measurement information does not need to be stored in the non-volatile memory.

The at least one trained machine learning model may include or be based on one or more of the following: a random forest, the K-nearest-neighbors algorithm, a support vector machine (SVM), Shapelets, a neural network (NN).

Accordingly, deriving model parameters from the soil measurement information may include developing the meta-model from the model parameters and storing the meta-model in nonvolatile memory. Machine learning models capable of deriving model parameters and/or a meta-model from the soil measurement information may include the neural network and the random forest.

The neural network may include a recurrent neural network (such as a long short-term memory (LSTM) autoencoder) and/or a convolutional neural network (CNN).

The LSTM model (or a combination of the LSTM and the CNN) may be advantageous since of the machine learning models the LSTM model has the smallest memory footprint (i.e., uses the smallest amount of memory) and the LSTM model makes determinations (i.e., predictions) faster than the other machine learning models discussed above. Accordingly, the LSTM model may be particularly advantageous if a relatively inexpensive and/or low performance computing device is used.

It may be advisable to use the relatively inexpensive and/or low performance computing device (e.g., embedded system) when the computing device is physically located on the soil compactor in order to reduce the cost of the soil compactor.

The at least one trained machine learning model may include a plurality of - trained machine learning models. Each of the trained machine learning models may be applied to a different one of the tasks.

In some cases, the plurality of trained machine learning models may include one or more models of the same type, e.g., there may be a plurality of neural networks. In addition or alternatively, the plurality of trained machine learning models may include one or more models of different types, e.g., there may be one or more neural networks, a random forest and a support vector machine.

The limited number of data points (e.g., the limited amount of measurement information) may be mitigated by using the plurality of trained machine learning models. Specifically, different machine learning models may be more suitable for different tasks, e.g., when determining the one or more characteristics of the soil comprises determining the type of soil, the degree of compaction of the soil and whether the soil is compactible. For example, it may be advantageous to apply one machine learning model to determine the type of the soil, a different machine learning model to determine the degree of compaction of the soil and yet another machine learning model to determine whether the soil is compactible.

Determining which machine learning model is most suitable for each task may be carried out using a statistical approach.

Determining the one or more characteristics of the soil may comprise using an ensemble method and/or a mixture of experts to apply the plurality of machine learning models. Cross validation, base model averaging, phase model combination or a bucket of models may be used to apply the machine learning models and make a final determination of the one or more soil characteristics.

In some cases, at least three machine learning models or at least four machine learning models may be applied. Plurality (also referred to as majority) voting may be used for making the final determination as to which machine learning model prediction to use. For example, if a majority of the machine learning models applied determine that the soil is not compactible and a minority of the machine learning models determine that the soil is compactible, then the final determination would be that the soil is not compactible.

The ensemble method and/or the mixture of experts may be applied to the following machine learning models: K-nearest-neighbor, support vector machines, shapelets, neural network. The neural network may be the LSTM (or a combination of the LSTM and the CNN).

Use of a plurality of machine learning models, the ensemble method and/or the mixture of experts may yield more accurate results.

It may be advisable to limit the number of machine learning models to one machine learning model (e.g., the LSTM) in view of limitations of the computing device, e.g., in view of limitations of the memory of the computing device (e.g., embedded system and/or microcontroller). The LSTM may provide adequate accuracy and may function on a low cost or a limited memory computing device.

The soil measurement information may be provided as a time series or a part (i.e., time window) of a time series from the measurement sensors.

Determining one or more soil characteristics may comprise applying a transform (e.g., Fourier transform, or a wavelet transform) to the soil measurement information of the soil.

### Computer program

According to a second aspect, a computer program (e.g., a computer program product) is provided. The computer program comprises instructions that, when the program is executed on a computer, cause the computer to carry out the method described above.

### Medium

According to a third aspect, a computer-readable medium is provided. The computer-readable medium may be non-transitory and/or a storage medium. The computer readable medium may store the computer program. Moreover, the computer readable medium may have computer readable instructions which, when implemented, cause a computer to carry out the method described above.

### Computer system

According to a fourth aspect, a computer system for determining one or more soil characteristics of the soil is provided. The computer system comprises a general-purpose computer comprising a first processor and a first memory. The computer system further comprises a computing device, possibly including a microcontroller, the computing device comprising a second processor and a second memory. The computer system further comprises an output device. The first processor is configured to pretrain at least one machine learning model based on simulation data to produce at least one pretrained machine learning model, the simulation data computed by simulating circumstances of movement of a soil compactor. The first processor is further configured to train the at least one pretrained machine learning model based on soil measurement information from a plurality of soils to produce at least one trained machine learning model. The second processor is configured to receive the at least one trained machine learning model. The second processor is further configured to receive soil measurement information from the soil. The second processor is further configured to determine, via the at least one trained machine learning model, one or more soil characteristics of the soil based on the soil measurement information of the soil. The output device is configured to output at least one of the one or more soil characteristics of the soil.

The second processor may be configured to receive the at least one trained machine learning model from the general-purpose computer. The second processor may receive the soil measurement information of the soil from at least one measurement sensor of a soil compactor. The second processor may be configured to store the at least one trained machine learning model in the second memory.

### Soil compactor

According to a fifth aspect, a soil compactor for determining one or more soil characteristics of a soil is provided. The soil compactor comprises a computing device, possibly including a microcontroller, the computing device comprising at least one processor and memory. The soil compactor further comprises an output device. The soil compactor further comprises at least one measurement sensor coupled to (i.e., communicatively connected to) the computing device. The at least one processor is configured to receive soil measurement information of the soil from the at least one measurement sensor. The at least one processor is further configured to determine, via at least one trained machine learning model, one or more soil characteristics of the soil based on the soil measurement information of the soil. The at least one trained machine learning model is pretrained based on simulation data, the simulation data computed by simulating circumstances of movement of a soil compactor. After pretraining, the at least one trained machine learning model is trained based on soil measurement information from a plurality of soils. The output device is configured to output at least one of the one or more soil characteristics of the soil.

The soil compactor may also be referred to as a soil compaction device. The soil compactor may be coupled to a carrier vehicle, such as an excavator.

The soil compactor may further comprise a motor and/or a soil contact plate.

The at least one measurement sensor may be configured to measure circumstances of movement of the soil compactor and/or the soil contact plate.

As discussed above, determining the one or more soil characteristics of the soil may comprise determining the soil type, whether the soil is compactible and the degree of compaction. In some cases, determining one or more soil characteristics of the soil may be conducted as follows.

About 2 seconds of measurement information (e.g., time series data) may be received from the at least one measurement sensor. First (initial) determinations (e.g., predictions) for the soil type, whether the soil is compactible, and the degree of compaction may be carried out. Then, the degree of compaction may be output about every 0.5 seconds. In response to a specified event (e.g., the end of compaction), closing determinations for the soil type, whether the soil is compactible, and the degree of compaction may be made.

The first determinations may be compared to the closing determinations.

An ensemble method and/or a mixture of experts may be used to make a final determination of the soil type, whether the soil is compactible and the degree of compaction.

In some cases, the degree of compaction is determined at millisecond intervals (e.g., every 5 milliseconds or every 100 milliseconds). In order to avoid overwhelming the user, the degree of compaction may be output about every 5 seconds, as described above.

The soil compactor may be capable of functioning without a cable connection, e.g., a cable for communication or power.

Unless otherwise indicated, elements described in the context of the soil compactor may be implemented in conjunction with the method and the computer system aspects and vice versa.

### Computing device

The computing device may be or include an embedded system, e.g., a microcontroller and/or a system on a chip. The embedded system, particularly the microcontroller, may be referred to as a computing device with limited resources. A computing device with sufficient resources, e.g., a general-purpose computer or a computing device capable of storing at least 10 minutes of soil measurement information from at least one measurement sensor in working memory, may cost about 10 times as much as the computing device with limited resources.

The memory of the computing device may comprise non-volatile memory and/or volatile memory. Specifically, the memory may comprise one or more of the following:
- random access memory (RAM), such as dielectric RAM, ferroelectric RAM, SRAM, PSRAM, SDRAM, TCM RAM,
- flash memory (e.g., NOR flash memory or embedded flash memory),
- read only memory (ROM), e.g., OTP ROM,
- a boot loader with security services support.

The non-volatile memory may include a capacity to store the measurement information collected from the measurement sensors over a specified time period. The specified time period may be at least 30 seconds, at least one minute, at least five minutes, at least 10 minutes.

The memory may include between 64 KB and 256 KB of flash memory (e.g., embedded flash memory), specifically, at least 128 kB of flash memory and/or between 512 KB and 1024 KB of RAM (e.g., SRAM), specifically, about 564 kB of RAM (the RAM may include at least 128 kB of TCM RAM, 432 kB of system RAM and 4 kB of backup RAM).

The computing device may comprise at least one input peripheral and/or at least one output peripheral.

The computing device may include an external memory controller with a 24-bit data bus.

The computing device may include an embedded system or an industrial personal computer (PC). The embedded system and the industrial personal computer may be contrasted with a general-purpose computer.

The computing device (e.g., embedded system) may be part of (e.g., a subsystem of) a complete device, such as the soil compactor. The computing device may be resistant to dust and/or vibration and may be capable of handling operation at higher temperatures, particularly when compared to the general-purpose computer.

The computing device (e.g., industrial personal computer) may have higher dependability and/or precision standards than the general-purpose computer. The computing device may have a heavier metal construction, additional cooling and/or air filtering as well as a wider operating temperature range (e.g., up to 75°C) and enhanced environmental protection (e.g., against dust and/or vibration) in comparison to the general-purpose computer. In comparison to the embedded system, the computing device may be more capable and/or more expensive.

The computing device may be contained on a single integrated circuit chip. The computing device may include a microcontroller. In comparison to the industrial personal computer, the computing device including the embedded system (particularly including the microcontroller) may save costs, particularly when the computing device has limited memory.

The processor may be integrated on an integrated circuit chip with the memory. The computing device may include a power saving mode, where the microcontroller may include a sleep mode and/or a standby mode.

The computing device may be resistant to strong vibrations (e.g., from the soil compactor or more specifically the motor) and may be resistant to moisture and dust.

The computing device may be capable of communicating over a wireless (WiFi) network.

The processor may include at least one processor core. The processor core may have a RISC architecture.

The processor core may include a superscalar pipeline, wherein the superscalar pipeline may have at least six stages and branch prediction.

The processor core may include a floating-point unit.

The processor may have a frequency (clock rate) of between 500 MHz and 600 MHz, specifically, about 550 MHz. The processor may be 32-bit or 64-bit.

### Soil contact plate

The soil contact plate may be approximately rectangular. The soil contact plate may have two sides that are longer (e.g., at least 30% or at least 40% longer) than the front and rear of the soil contact plate.

The front and/or rear of the soil contact plate may include an inclined or sloping portion.

The soil contact plate may include or be made of steel.

### Motor

The motor may be configured to apply a vibratory force to move (vibrate) or oscillate the soil contact plate. The motor may be closer to a first side of the soil contact plate then a second side of the soil contact plate. The motor may be closer to the rear of the soil contact plate than to the front of the soil contact plate. The first side may be the left side and the second side may be the right side, defined relative to a forward direction of travel of the soil compactor.

The motor may be capable of a vibration frequency of at least 1500 p/min, at least 2000 p/min or at least 2500 p/min. The motor may be capable of a travel speed of at least 20 cm/sec, at least 25 cm/sec or at least 30 cm/sec. The motor may have a net power of at least 3 kW, at least 3.5 kW, at least 4kW or at least 5kW.

The motor may be capable of imposing a load on (i.e., applying a load to) the soil contact plate.

### Measurement sensors

In some cases, the at least one measurement sensor may be capable of functioning with power from the soil compactor (e.g., about 12 Volts).

In some cases, the at least one measurement sensor may include one or more accelerometers. More specifically, the at least one measurement sensor may be implemented as one or more accelerometers.

In addition or alternatively, the at least one measurement sensor may include a plurality of measurement sensors. In some cases, the plurality of measurement sensors may include at least two different types of sensor or at least three different types of sensor. The types of measurement sensor may include one or more of the following: acceleration, strain, position, vibration (e.g., geophone), pressure (e.g., microphone), force, piezoelectric, temperature.

In addition or alternatively, the one or more accelerometers may describe the mechanical behavior of the soil compactor.

In addition or alternatively, the one or more accelerometers may be 3D accelerometers, e.g., Micro-Electro-Mechanical Systems (MEMS) accelerometers.

In addition or alternatively, the accelerometers (e.g., at least three accelerometers) may include a first accelerometer (ACC_1), a second accelerometer (ACC_2), and a third accelerometer (ACC_3). The accelerometers may be located on the soil contact plate. Alternatively, at least one of the accelerometers may be located elsewhere on the soil compactor, e.g., in an upper portion or an inner portion.

In some cases, the first, second and third accelerometers (ACC_1, ACC_2, ACC_3) may be located proximate to opposing edges of the soil contact plate. Each of the first second and third accelerometers (ACC_1, ACC_2, ACC_3) may be located proximate to a different corner of the soil contact plate than the other accelerometers.

The first (ACC_) and second (ACC_2) accelerometers may be located in a front portion of the soil contact plate relative to a forward direction of travel of the soil compactor and the third (ACC_3) accelerometer may be located in a rear portion of the soil contact plate relative to a backward direction of travel of the soil compactor.

In some cases, the first (ACC_1) accelerometer may be located about halfway between a first corner of the motor and a first corner of the soil contact plate. The first (ACC_1) accelerometer may be about one third of the distance from the first corner of the soil contact plate to a portion of the motor closest to the first corner of the soil contact plate.

The second accelerometer (ACC_2) may be located proximate to a second corner of the soil contact plate and/or about a third of the distance from an edge of the soil contact plate to a portion of the motor.

The third accelerometer (ACC_3) may be located about two thirds of the distance from a third corner of the soil contact plate and a portion of the motor closest to the third corner of the soil contact plate.

Use of a limited number of sensors and/or only one type of sensor (e.g., three accelerometers) may be desirable for cost reasons. Specifically, limitations imposed by the computing device (especially if the computing device is implemented as the microcontroller) may make it advisable to limit the number of sensors. For example, limitations in the memory of the computing device may make it desirable to prioritize the measurement information stored there. As another example, limitations in the processing power of the computer may make it difficult to process input from more than three sensors.

Sufficiently accurate measurements can be obtained using a single sensor (e.g., a single acceleration sensor). Accordingly, the at least one measurement sensor may be implemented as a single acceleration sensor, e.g., a single acceleration sensor having three channels. More accurate measurements can be obtained using three acceleration sensors, e.g., ACC_1, ACC_2, and ACC_3, particularly, when the sensors obtain measurements in the x, y and z directions. A significant further increase in accuracy (e.g., about 5% or about 10%) can be obtained using four additional acceleration sensors, e.g., ACC_4, ACC_5, ACC_6 and ACC_7.

Signals from at least one or all of the measurement sensors may be sampled at a rate of about 20 kHz. This may ensure that no relevant signal components are neglected.

### Upper portion

The motor of the soil compactor may include a housing. The soil compactor may further comprise an upper portion attached to the housing. The upper portion may also be referred to as a containing portion, a mounted portion or a holding portion. The upper portion may be located above the motor and may extend from approximately the rear of the motor to approximately the middle of the motor.

The upper portion may include a holding area. The holding area may have a U-shape including an approximately horizontal surface.

The upper portion may include a frequency controller (ACC_FC). The at least three accelerometers may further comprise a plurality of accelerometers (ACC_FC_X, ACC_FC_Y, ACC_FC_Z) attached to the frequency controller (ACC_FC).

The at least three accelerometers may further comprise at least one accelerometer (ACC_4, ACC_5, ACC_6) on the upper portion. The at least one accelerometer (ACC_4, ACC_5, ACC_6) on the upper portion may be contained in the holding area. The at least one accelerometer (ACC_4, ACC_5, ACC_6) on the upper portion may comprise at least three accelerometers located on the horizontal surface.

The at least one accelerometer (ACC_4, ACC_5, ACC_6) on the upper portion may include an accelerometer (ACC_4) located proximate to a first arm of the U-shape. The accelerometer (ACC_4) may be located between the middle of the U-shape and the first arm of the U-shape. The accelerometer (ACC_4) may be closer to the first arm of the U-shape than the middle of the U-shape.

The at least one accelerometer on the upper portion may include an accelerometer (ACC_5) located between the middle of the U-shape and a second arm of the U-shape. The accelerometer (ACC_5) is closer to the middle of the U-shape then the second arm of the U-shape. The accelerometer (ACC_5) is located closer to the rear of the soil compactor then the accelerometer (ACC_4) located proximate to the first arm of the U-shape.

The at least one accelerometer includes an accelerometer (ACC_6) located between the middle of the U shape and a second arm of the U shape (i.e., similar to ACC_5), where in the accelerometer (ACC_6) is closer to the second arm of the U shape then the middle of the U shape (i.e., different from ACC_5).

### Strain sensors

The at least one measurement sensor may further include at least one load cell, e.g., at least one strain sensor (DS_1, DS_2). The at least one strain sensor (DS_1, DS_2) may include a plurality of strain sensors. The at least one strain sensor (DS_1, DS_2) may collect strain measurements in three directions.

The at least one strain sensor (DS_1, DS_2) may collect strain measurements at angles of 0, 45 and 90 degrees. The at least one strain sensor (DS_1, DS_2) may include three channels corresponding to each the angles.

The at least one strain sensor may be located on the surface of one of the arms of the U-shape. The at least one strain sensor (DS_1, DS_2) may be located in one of the four corners of the arms of the U-shape. Each channel may be located on a vertical surface of one of the arms of the U-shape.

Alternatively, the strain sensors may be attached to the horizontal surface of the U-shape. Accordingly, each channel may be located on the horizontal surface. In some cases, four strain sensors may be installed. Each of the strain sensors may be installed in a different corner of the horizontal surface. Accordingly, twelve strain channels of the four strain sensors are occupied for collecting strain measurements.

The strain sensors may be adhered to the U-shape.

Experimentation has shown that an increase in accuracy of about 5% can be obtained when the measurement sensors further include the plurality of strain sensors. Accelerometers or strain sensors may be more desirable than pressure sensors, e.g., pressure sensors. In particular, accelerometers or strain sensors may be easier to keep clean than pressure sensors.

The strain sensors may be implemented as strain gauges or strain gauge rosettes.

Soil measurement information from the strain sensors may be used to compute Young's modulus, i.e., a mechanical property that measures the tensile or compressive stiffness when a force is applied lengthwise. Young's modulus is the modulus of elasticity for tension or axial compression.

In view of the high protection requirements of building and construction (e.g., the need for robust and reliable sensors in view of potential dirt, dust and external damage) the sensors may be fully enclosed (e.g., IP68 protection rating).

### Pressure sensors

The at least one measurement sensor may further include at least one pressure sensor, such as a microphone. The at least one pressure sensor may be a plurality of pressure sensors.

The at least one pressure sensor may include a first pressure sensor in the upper portion and/or a second pressure sensor attached to a cabin (cab) of the excavator.

The second pressure sensor may be oriented in the direction of the soil compactor.

Experimentation has shown that the end of soil compaction results in a change in the sound generated by the soil compactor (i.e., acoustic change) that is detectable by the user of the soil compactor; the acoustic change is also detectable by a pressure sensor.

### Vibration Sensors

At least one vibration sensor, such as a geophone, may be installed in the soil. The at least one vibration sensor may include at least six vibration sensors.

The vibration sensors may be used to measure vibrations of the soil in the vicinity of the soil compactor. Soil measurement information from the vibration sensors may be received by a computer that is separate from the computing device of the soil compactor so as to avoid interference. The soil measurement information from the vibration sensors and the soil measurement information from the soil compactor may be synchronized.

Alternatively, the soil measurement information from the vibration sensors may be received by the computing device of the soil compactor and used to perform the evaluation of the soil.

### Measurement Amplifier

Each of the measurement sensors may be communicatively connected to a measurement amplifier, e.g., via a corresponding cable. The measurement amplifier may be fastened, e.g., via fasting means such as at least one screw, to the soil compactor. There may be a plurality of measurement amplifiers, such that different measurement sensors may be connected to different measurement amplifiers.

The measurement amplifier may be resistant to strong vibrations (e.g., from the soil compactor or more specifically the motor) and may be resistant to moisture and dust.

### Calibration

Calibration of the soil compactor may be carried out using a weighing plate. The weighing plate may be made of steel. The soil compactor may apply a load to the weighing plate and the load may be recorded by means of one or more load cells mounted on the weighing plate and strains measured by strain sensors of the soil compactor. By correlating strain measurements of the soil compactor and the load measurements from the load cells, it may be possible to determine regression equations that describe the load applied by the soil compactor as a function of the strain measurements.

The regression equations may be used to prepare soil measurement information received from the measurement sensors in order to determine one or more soil characteristics of the soil, particularly to determine the soil type, soil compactibility (i.e., compressibility) and degree of compaction. In particular, the regression equations may be used to determine the load applied by the soil contact plate. The applied load may be provided in a real-time display in the excavator.

### Implementations

The subject matter described in this disclosure can be implemented as a method or on a device, possibly in the form of one or more computer programs (e.g., computer program products). Such computer programs may cause a data processing apparatus to perform one or more operations described in the present disclosure.

The subject matter described in the present disclosure can be implemented in a data signal or on a machine readable medium, where the medium is embodied in one or more information carriers, such as a CD-ROM, a DVD-ROM, a semiconductor memory, or a hard disk. In particular, disclosed subject matter may be tangibly embodied in a non-transitory machine (computer) readable medium.

In addition, the subject matter described in the present disclosure can be implemented as a system including at least one processor, and a memory coupled to the at least one processor. The memory may encode one or more programs to cause the at least one processor to perform one or more of the methods described in the application. Further subject matter described in the present disclosure can be implemented using various machines.

Details of one or more implementations are set forth in the exemplary drawings and description that follow. Other features will be apparent from the description, the drawings, and from the claims.

### Brief Description of the Drawings

FIG 1 shows an arrangement of strain sensors on a soil compactor.
FIG 2 shows the soil compactor, acceleration sensors on the soil compactor and microphones on the soil compactor and on the excavator.
FIG 3 shows a frequency controller of the soil compactor.
FIG 4 shows a mechanical system for computing simulation data to simulate circumstances of movement of the soil compactor.
FIG 5 shows a flowchart of a method for determining one or more soil characteristics of a soil.

### Detailed Description

In the following text, a detailed description of examples will be given with reference to the drawings. Various modifications to the examples may be made. In particular, one or more elements of one example may be combined and used in other examples to form new examples.

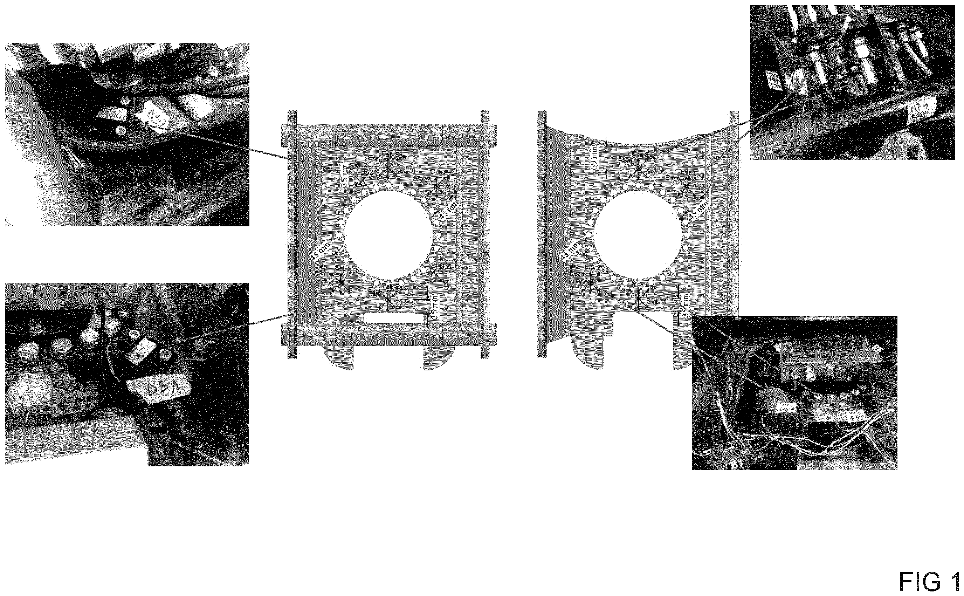

FIG 1 shows an arrangement of strain sensors on a soil compactor. More specifically, strain sensors DS1 and DS2 arranged on a horizontal surface of an upper portion of the soil compactor. In addition, measurement points associated with the strain sensors DS1 and DS2 are shown. In particular, measurement points MP6 and MP8 are associated with DS1 and measurement points MP5 and MP7 are associated with DS2. Each measurement point may include three channels. As can be seen, the measurement points may be distanced between 80 mm and 20 mm specifically between 70 mm and 25 mm, more specifically 35 mm or 45 mm or 65mm from a central opening, specifically from bolt holes surrounding the central opening and/or from a side edge of the soil compactor.

According to an embodiment, three measurement points are provided with e.g. an acceleration sensor at each measurement point. According to another embodiment of the invention, four measurement points are provided with e.g. an acceleration sensor at each measurement point. According to another embodiment of the invention, five measurement points are provided with, e.g., an acceleration sensor at each measurement point. According to another embodiment of the invention, six measurement points are provided with e.g. an acceleration sensor at each measurement point. In addition to the above embodiments, specifically comprising 3, 4, 5 or 6 acceleration sensors, further measurement points may be provided e.g. comprising one or two or three or four strain sensors and/or further measurement points may be provided e.g. comprising one or two or three or four or more pressure sensors.

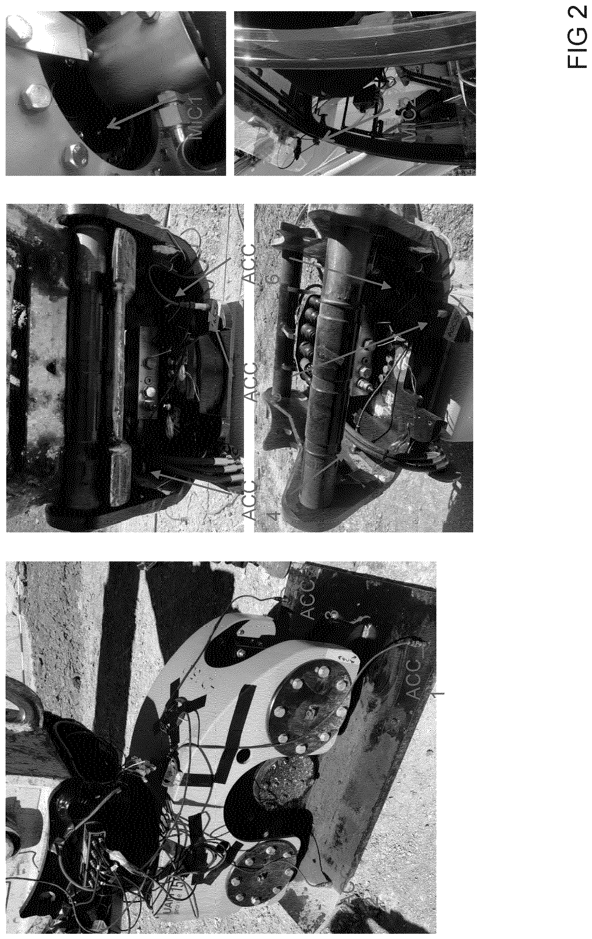

FIG 2 shows the soil compactor, as well as six acceleration sensors ACC_1, ACC_2, ACC_3, ACC_4, ACC_5, ACC_6 attached to the soil compactor. ACC_1, ACC_2 and ACC_3 are attached to a soil contact plate. ACC_4, ACC_5 and ACC_6 are attached to the upper portion of the soil compactor.

FIG 2 also shows two pressure sensors, i.e., microphones, MiC1 and MIC2. Microphone MIC1 is located in the upper portion. Microphone MIC 2 is located in a cabin of an excavator. The soil compactor may be coupled (attached) to the excavator.

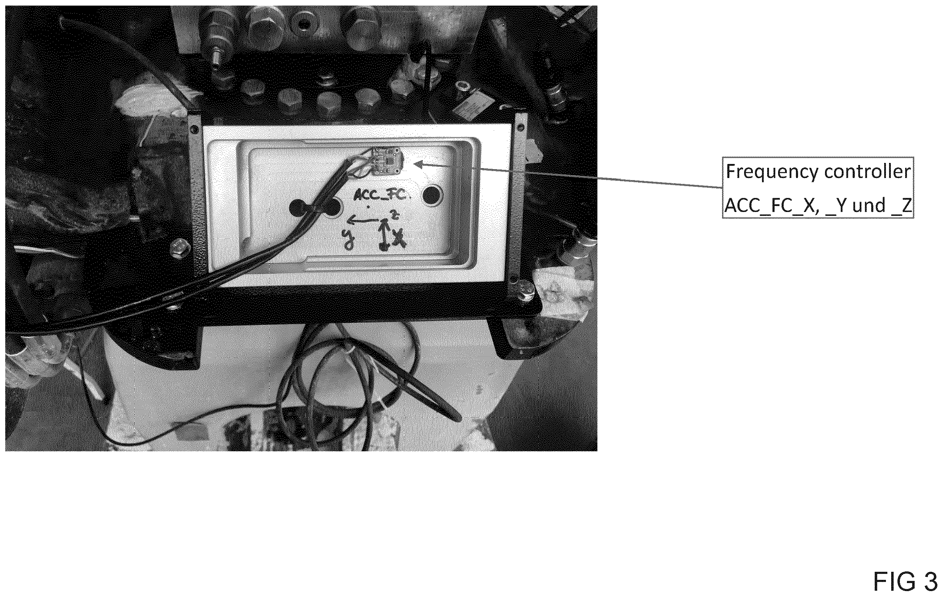

FIG 3 shows a frequency controller of the soil compactor. The frequency controller includes accelerometers (i.e., acceleration sensors) ACC_FC_X, ACC_FC_Y and ACC_FC_Z.

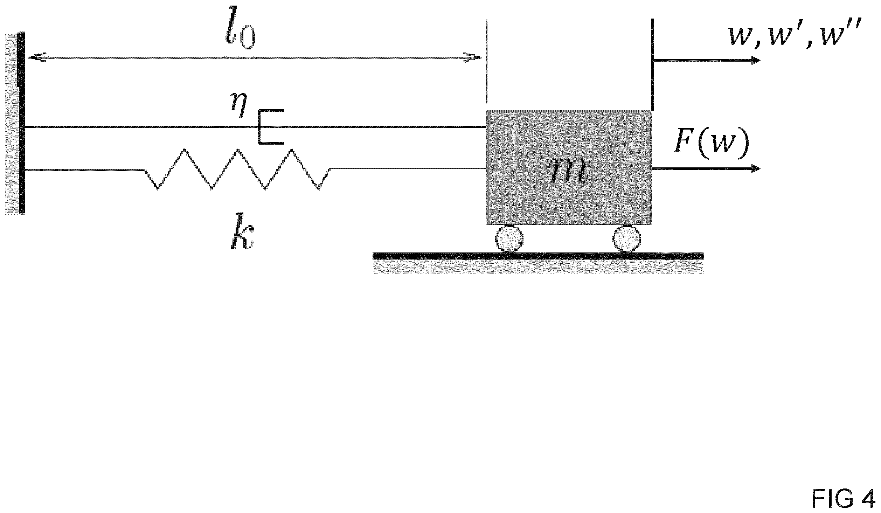

FIG 4 shows an exemplary mechanical system that may be used (e.g., simulated) to simulate circumstances of movement of a soil compactor and compute simulation data. As shown in the example, the exemplary mechanical system is a single degree of freedom system. The input parameters of the mechanical system include *k* - stiffness of the soil modeled as a spring, *l*₀- length of the unstretched spring, *m* - mass, , *w* - deformation, *w*' - velocity, *w*" - acceleration, *η* damping (e.g., hysteresis) and F(*w*) force as a function of deformation, *w*' - velocity may be a first temporal derivative of the deformation *w* and *w*" - acceleration may be a second temporal derivative of the deformation *w*.

Change to the deformation *w* may be due to or influenced by movement of the soil compactor. Similarly, the temporal derivatives of the deformation *w* may be induced by the soil compactor. The soil may be characterized by damping *η* and/or stiffness *k.* Damping *η* and stiffness *k* may change during soil compaction.

The exemplary mechanical system may be used for pretraining to produce at least one pretrained machine learning model, which can then be trained to produce at least one trained machine learning model. Specifically, the exemplary mechanical system may be used to compute transform simulation data, wherein the at least one trained machine learning model is pretrained using the transformed simulation data, wherein computing the transform simulation data may comprise applying a transform to simulation data computed by simulating circumstances of movement of the soil compactor.

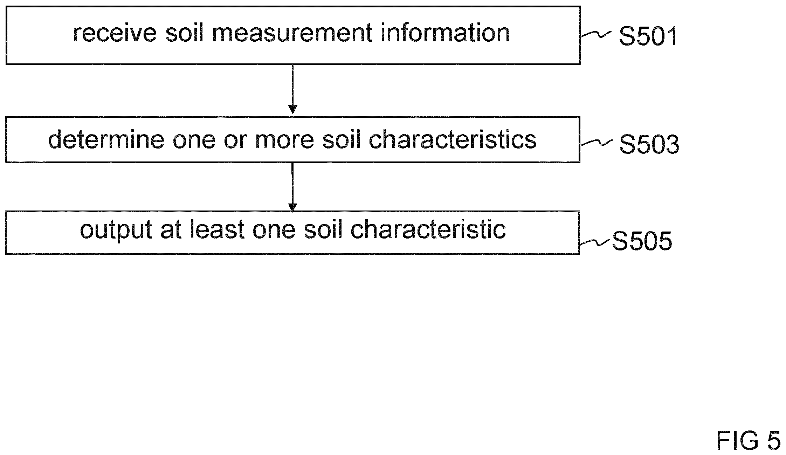

FIG 5 shows a flowchart of a method for determining one or more soil characteristics of a soil.

The method may comprise receiving at least one trained machine learning model. The at least one trained machine learning model may be (i.e., may have been) pretrained based on simulation data, the simulation data having been computed by simulating circumstances of movement of a soil compactor.

At step S501, the method comprises receiving soil measurement information of the soil. For example, the soil measurement information may be received from at least one measurement sensor of the soil compactor, e.g., at least one of the accelerometers described above.

At step S503, the method comprises determining, via at least one trained machine learning model, one or more soil characteristics of the soil.

The at least one trained machine learning model may be trained based on soil measurement information from a plurality of soils. In cases where the at least one trained machine learning model includes a plurality of trained machine learning models, the one or more soil characteristics of the soil may include a plurality of soil characteristics, wherein the number of soil characteristics corresponds to the number of trained machine learning models.

In cases where the at least one trained machine learning model includes a plurality of trained machine learning models, additional determining steps may be carried out at step S503 to determine, based on the further trained machine learning models, further soil characteristics of the soil.

At step S505, the method comprises outputting at least one of the one or more soil characteristics of the soil. Step S505 may comprise outputting all the soil characteristics of the soil that have been determined at step S503. Furthermore, steps S503 and S505 may be carried out iteratively for each of the one or more soil characteristics of the soil. In addition, the iterations may be carried out at different times, e.g., a first characteristic of the soil (e.g., whether the soil is compactable) may be determined and output a few seconds after step S501 is carried out, a second characteristic of the soil (e.g., a degree of compaction of the soil) may be determined and output multiple times during operation of the soil compactor and a third characteristic of the soil (e.g., a soil type) may be determined and output after operation of the soil compactor has been completed (e.g., after the soil has been compacted).

## Claims

1. A computer-implemented method for determining one or more soil characteristics of a soil, the method comprising:
receiving (S501) soil measurement information of the soil;
determining (S503), via at least one trained machine learning model, one or more soil characteristics of the soil based on the soil measurement information of the soil,
wherein the at least one trained machine learning model is pretrained based on simulation data, the simulation data computed by simulating circumstances of movement of a soil compactor,
wherein, after pre-training, the at least one trained machine learning model is trained based on soil measurement information from a plurality of soils; and
outputting (S505) at least one of the one or more soil characteristics of the soil.

2. The method of claim 1, wherein simulating circumstances of movement of the soil compactor comprises one or more of the following:
simulating one or more forces applied by the soil compactor, movement of the soil compactor, environmental conditions proximate to the soil compactor.

3. The method of claim 1 or 2, wherein the at least one trained machine learning model is pre-trained by:
computing transformed simulation data; wherein the at least one trained machine learning model is pretrained using the transformed simulation data, wherein computing the transformed simulation data may comprise applying a transform to the simulation data.

4. The method of any one of the preceding claims, wherein simulating the circumstances of movement of the soil compactor comprises simulating at least one mechanical system.

5. The method of any one of the preceding claims, wherein the at least one trained machine learning model comprises a plurality of trained machine learning models,
wherein the one or more soil characteristics of the soil comprise a plurality of soil characteristics of the soil,
wherein there is a different trained machine learning model for each soil characteristic of the soil.

6. The method of any one of the preceding claims,
wherein determining the one or more soil characteristics of the soil based on the soil measurement information of the soil comprises providing at least one fixed length input to the at least one trained machine learning model, wherein the fixed length input is derived from the soil measurement information of the soil, wherein the fixed length input may be derived by applying a transform to the soil measurement information;
wherein, after pre-training, the at least one trained machine learning model is trained using soil measurement information from a plurality of soils by receiving at least one fixed-length input, wherein the at least one fixed length input is derived by applying a transform to the soil measurement information from the plurality of soils.

7. The method of claim 6,
wherein the soil measurement information of the plurality of soils includes multiple sets of values,
wherein a plurality of sets of values of the multiple sets of values have different lengths;
wherein applying the transform to the soil measurement information from the plurality of soils comprises applying the transform to the multiple sets of values of the soil measurement information of the plurality of soils to produce transformed soil measurement information of the plurality of soils including transformed sets of values;
wherein the at least one trained machine learning model is trained using the transformed sets of values.

8. The method of preceding claim 7, further comprising:
wherein the at least one trained machine learning model is trained using a plurality of inputs,
wherein each of the transformed sets of values is set to a specified number of transformed values, such that each of the plurality of sets of values has the same length.

9. The method of any one of claims 6 to 8, wherein determining the one or more soil characteristics of the soil based on the soil measurement information of the soil further comprises interpolating the transformed values so that amplitudes corresponding to the same frequency in different sets of the sets of transformed values are matched with each other.

10. The method of any one of claims 7 to 9, further comprising filtering out transformed values having a frequency greater than a specified frequency.

11. The method of any one of the preceding claims, wherein receiving the soil measurement information of the soil comprises receiving the soil measurement information of the soil from at least one measurement sensor of a soil compactor;
wherein the at least one measurement sensor is physically located on the soil compactor, and/or
wherein determining the one or more soil characteristics of the soil and outputting the at least one of the one or more soil characteristics of the soil are carried out by a computing device and the computing device is physically located on the soil compactor.

12. The method of any one of the preceding claims, wherein the at least one trained machine learning model includes at least one neural network;
wherein the at least one neural network includes one or more of the following: a feed forward neural network, a recurrent neural network such as a long short-term memory neural network, a convolutional neural network;
wherein the at least one neural network has one or more of the following characteristics:
between about 5 layers and about 15 layers;
between about 300 nodes and about 2000 nodes;
an output layer with exactly one node;
a sigmoid activation function.

13. A computer program comprising instructions that, when the program is executed by a computer, cause the computer to carry out the method of any one of the preceding claims.

14. A computer system for determining one or more soil characteristics of a soil, the computer system comprising:
a general-purpose computer comprising a first processor and a first memory;
a computing device, possibly including a microcontroller, the computing device comprising a second processor and a second memory;
an output device;
wherein the first processor is configured to:
pre-train at least one machine learning model based on simulation data to produce at least one pretrained machine learning model, the simulation data computed by simulating circumstances of movement of a soil compactor,
train the at least one pretrained machine learning model based on soil measurement information from a plurality of soils to produce at least one trained machine learning model;
wherein the second processor is configured to:
receive the at least one trained machine learning model;
receive soil measurement information of the soil;
determine, via the at least one trained machine learning model, one or more soil characteristics of the soil based on the soil measurement information of the soil;
wherein the output device is configured to output at least one of the one or more soil characteristics of the soil.

15. A soil compactor for determining one or more soil characteristics of a soil, the soil compactor comprising:
a computing device, possibly including a microcontroller, the computing device comprising at least one processor and memory,
an output device; and
at least one measurement sensor (ACC_1) coupled to the computing device;
wherein the at least one processor is configured to:
receive soil measurement information of the soil from the at least one measurement sensor;
determine, via at least one trained machine learning model, one or more soil characteristics of the soil based on the soil measurement information of the soil,
wherein the at least one trained machine learning model is pretrained based on simulation data, the simulation data computed by simulating circumstances of movement of a soil compactor,
wherein, after pre-training, the at least one trained machine learning model is trained based on soil measurement information from a plurality of soils; and
wherein the output device is configured to output at least one of the one or more soil characteristics of the soil.
